# EUROPEAN PATENT SPECIFICATION

(11) **EP 1 814 732 B1**
(45) Date of publication and mention of the grant of the patent: **20.01.2010**
(21) Application number: 05813674.8
(22) Date of filing: 24.11.2005
(51) Int. Cl.: B32B 27/36, C08J 11/06

(54) **LAMINATE AND METHOD OF PRODUCING THE SAME**
LAMINAT UND VERFAHREN ZU DESSEN HERSTELLUNG
LAMINE ET PROCEDE DE FABRICATION ASSOCIE

(30) Priority: 24.11.2004 NL 1027576
(43) Date of publication of application: 08.08.2007
(73) Proprietor: Trespa International B.V., 6002 SM Weert (NL)
(72) Inventor: RASMUSSON, Dennis, Gustav, S-313 30 Oskarström (SE); LE CLERCQ, Glen, NL-6005 LG Weert (NL)
(74) Representative: op den Brouw-Sprakel, Vera Stefanie Irene
(86) International application number: PCT/NL2005/000811
(87) International publication number: WO 2006/057557

(56) References cited:
- EP-A- 0 605 130
- WO-A-02/20246
- WO-A-95/32859
- DE-A1- 10 236 730
- US-A- 5 783 283

## Description

The present invention relates to a moulded rigid laminate comprising two or more bonded-together carrier layers and possibly one or more intermediate layers and to a method of producing the same.

Such a laminate is known from US patent application US 2002/0146954, which laminate comprises successively a melamine-impregnated upper layer, a decorative layer, a PET-G containing core layer, a water-resistant adhesive and a water-resistant substrate, such as PVC. The thickness of the total laminate is about 1/8 inch (3 mm). The drawback of such a laminate is that several mutually different materials, among which an adhesive, are required for producing the laminate. As different materials for the individual layers as well as an adhesive are used, there is a considerable risk of delamination and/or warping.

German patent application DE 102 36 730 relates to a tear-resistant foil consisting of a first foil of plastic material, which is bonded to a second foil of plastic material by means of an adhesive. A large number of plastics, among which PET, can be used as a foils. The thickness of the foil is about 5-25 µm.

European patent application EP 0 605 130 relates to a composite foil comprising an opaque crystalline polyester layer and a transparent crystalline polyester layer. PET is mentioned as an example of the polyester layer. The thickness of the composite foil is about 30-400 µm.

International application WO 95/32859 relates to a thermal insulation material consisting of a non-woven thermoplastic fibre mat of PET, which may be provided with a foil of plastic material on both sides. The insulation material has a thickness of about % inch (about 12.5 mm).

US patent US 5,783,283 relates to a multilayer foil comprising a layer of a first polymer and a layer of a second polymer, which second polymer has been crystallized into a multitude of crystalline structures. By way of example, a foil comprising alternating layers of PET and PEN having a total thickness of 12-13 mils (0.3-0.33 mm) is mentioned.

International application WO 02/20246 relates to plastic bottles consisting of a first layer comprising virgin polyester and a second layer comprising recycled polyester (for example PET).

The packaging materials that are now most frequently used for foodstuffs and beverages are glass, tin, paper and plastic. Especially PET is used as a plastic, for example in soft drink bottles. Such bottles are collected under a public scheme and reused a number of times. After being reused a limited number of times, the properties of such a PET bottle have deteriorated to such an extent that further reuse is no longer possible. This results in a considerable amount of waste, which can hardly be biologically decomposed, if at all. In addition to that the Dutch authorities have decided to do away with the deposit-return system for such bottles in the future, so that a large amount of bottles threatens to end up in the environment. It is preferable, therefore, to reuse said PET material.

It is an object of the present invention to provide a rigid laminate that can be built up of a small number of different materials without using a separate adhesive.

It is furthermore an object of the present invention to provide a rigid laminate that is partially made of recycled materials.

Another object of the present invention is to provide a rigid laminate that exhibits excellent properties as regards water resistance, dimensional stability, scratch resistance and light fastness.

In addition to that it is an object of the invention to provide a method of producing a rigid laminate, preferably from a single material.

One or more of the above objects are achieved by a moulded rigid laminate as referred to in the introduction, which is **characterized in that** the laminate comprises at least five carrier layers composed of PET foils, wherein the amount of PET (polyethylene terephthalate) is at least 75 wt.%, based on the total weight of the laminate, wherein the thickness of the total laminate is at least 3 mm.

One or more of the above objects, viz. a good scratch resistance, E-modulus, water resistance, light fastness, fire resistance and mutual adhesion of the layers, is (are) achieved by using a PET content as mentioned above.

The laminate according to the present invention preferably comprises at least 95 wt.% PET, based on the total weight of the laminate.

The laminate according to the present invention can be worked, using nails and screws, among other things, without this leading to cracking of the laminate. In addition to that, the laminate according to the present invention has advantageous fire resistance properties, so that it is self-extinguishing. The fire resistance of the present laminate is better than the fire resistance of, for example, laminates that consist mainly of PP (polypropylene) or PE (polyethylene). Fire resistance is a property that is especially of importance if the present laminate is to be used in an environment where there is a fire hazard, for example in kitchens, or in restaurants and cafes. The present laminate is furthermore more environmentally friendly than, for example, laminates that consist mainly of PVC (polyvinyl chloride), from which harmful chloride compounds may be released. In addition to that, the present laminate can be produced at lower cost than, for example, laminates that consist mainly of PC (polycarbonate).

Preferably, the carrier layers and possibly one or more or intermediate layers have been bonded together by means of compression under an elevated pressure, without an additional adhesive being used.

An advantage of such a laminate is that it is not necessary to use a separate adhesive in order to obtain a durable bond between the carrier layers and possibly one or more intermediate layers. The carrier layers and/or the intermediate layers are durably bonded together by partially plasticising the polymeric components temporarily by means of compression under an elevated pressure. This strongly reduces the risk of delamination of the individual layers in comparison with laminates that use an adhesive for bonding the various layers together.

The laminate according to the present invention may comprise one or more intermediate layers that separate the carrier layers from each other or that are present on one or both surfaces of the laminate, which intermediate layers have preferably been selected from the group consisting of polyester, paper, PE (polyethylene), PP (polypropylene), PVC (polyvinyl chloride), HPL (High Pressure Laminate), MDF (Medium Density Fibreboard), HDF (High Density Fibreboard) and combinations thereof. The advantage of using the intermediate layers is that specific properties, such as the density and the rigidity, but also the appearance, of the laminate can be varied as desired. The intermediate layers may be present between two carrier layers or on one or both surfaces of the laminate. Furthermore, decorative intermediate layers, such as printed paper, may be used. It is also possible to use different structures and different arrangements of the various layers, which may be varied at will in order to obtain the required properties.

In an especially preferred embodiment of the present invention, the laminate comprises only PET containing carrier layers and no intermediate layers, so that a laminate having a homogeneous composition is obtained.

The PET material according to the present invention is preferably selected from the group consisting of virgin (non-recycled) A-PET, recycled A-PET, virgin PET-G, recycled PET-G and combinations thereof. A-PET is amorphous PET, whilst PET-G is a glycol-modified PET. A-PET has a better scratch resistance, chemical resistance and rigidity than PET-G, whilst PET-G has a higher impact resistance than A-PET.

A high scratch resistance is in principle only relevant for the surface of the laminate, i.e. the outer layer, and consequently it is preferable if carrier layers that mainly contain A-PET are present on one or both surfaces of the laminate. More towards the centre of the laminate, carrier layers that mainly contain PET-G may be used in addition to carrier layers that contain A-PET, since the scratch resistance is not relevant there.

The degree of crystallinity of the PET that is used is determined by means of X-ray diffraction. The degree of crystallinity has an influence on the degree to which the laminate is scratch resistant. The present inventors have found that the following obtains: the higher the degree of crystallinity, the higher the scratch resistance. The degree of crystallinity also has an influence on the elasticity modulus of the material. The present inventors have found that the following obtains: the higher the degree of crystallinity of the laminate, the higher the elasticity modulus and the more rigid the material. The elasticity modulus will be explained in more detail hereinafter. Thus the physical properties of the laminate can be influenced by varying the degree of crystallinity over the thickness of the laminate.

In the laminate according to the invention, the degree of crystallinity of the PET that is used is preferably inhomogeneous over the thickness of the laminate.

The present inventors have found that the appearance of A-PET changes under the influence of the degree of christallinity, with A-PET becoming more milky and less transparent as the degree of christallinity increases, whilst PET-G exhibits hardly any christallinity and is practically transparent, therefore. Thus it is possible to control the appearance of the laminate by controlling the degree of christallinity over the thickness of the laminate. Thus, a laminate composed of alternating PET-G and A-PET carrier layers may exhibit a striped pattern of alternating transparent and non-transparent layers, seen in side view. Furthermore it is possible to control the total transparency of the laminate during production by suitably alternating PET-G and A-PET.

Preferably, the degree of christallinity of the PET is inhomogeneous over the thickness of the laminate, preferably in a symmetrical manner, with the degree of christallinity in the centre of the laminate differing from that at the surface of the outer layer of the laminate. This makes it possible to control the scratch resistance and the appearance of one or both surfaces of the laminate, for example.

In a special embodiment, PET containing layers at or near one or both surfaces of the laminate exhibit a higher degree of christallinity than PET containing layers in or near the centre of the laminate, so that a high scratch resistance is obtained at the surface of the laminate, which is desirable.

The laminate according to the present invention comprises at least five carrier layers. In another embodiment, the laminate according to the present invention comprises a larger number of carrier layers, for example ten or even twenty. Furthermore, one or more intermediate layers may be provided. Both the appearance and the physical properties of the laminate can be influenced by using carrier layers and/or intermediate layers of different origin and christallinity and/or having different physical properties.

As described above, the PET containing materials that are currently commercially available, such as soft drink bottles, are recycled by being shredded and subsequently being extruded into PET foils. Said foils have a thickness of about 1-2 mm. The existing foils are produced by means of an extrusion or co-extrusion process, and so far it has not been possible to produce extruded PET materials having a thickness of 1 cm or more.

The present invention relates to rigid laminates, a term used to indicate moulded elements that comprise at least two layers, which layers are bonded together, using heat and an elevated pressure, by plasticising at least some of the polymeric components, such as PET, of the layers, with no separate adhesive being used between the carrier layers and the intermediate layers. The term rigid is understood to mean that the laminate exhibits a certain degree of stiffness. Foils are known not to be stiff but rather flexible by nature, and thus the present invention does not relate to individual foils as such. Rigid laminates composed of different foils, wherein the PET content of the total laminate is at least 75 wt.%, based on the weight of the total laminate, on the other hand, are covered by the present invention. In addition, PET containing materials which have been produced solely by means of a (co-)extrusion process, and which are not laminates, therefore, are not covered by the present invention.

The laminating process according to the present invention makes it possible to obtain a PET containing laminate having a thickness of at least 3 mm or more, preferably at least 10 mm or more.

The laminate according to the present invention may comprise five of the aforesaid recycled PET foils, for example, possibly in combination with virgin PET containing carrier layers. When recycled PET materials are used, the PET content of the carrier layer may be lower than 100%, since other components, such as fillers, plasticisers, colorants and the like may be present.

The present laminate may have a dimension of, for example, 1500 x 2500 mm, or even 2000 x 4000 mm, or even larger, dimensions that so far could not be obtained with the (co-)extrusion techniques that are presently known. When laminates having such a dimension are used for worktops or partition walls, it is not necessary to connect several laminates side by side. Such a side-by-side connection is disadvantageous, because it would lead to seams being formed between the individual plates, which seams would not only have an adverse effect on the strength but also on the decorative appearance of the whole.

Preferably, the laminate according to the present invention has an elasticity modulus of at least 2400 N/mm². The elasticity modulus is measured in accordance with the EN ISO178: 2003 standard The advantage of an elasticity modulus having this value is that the laminate has advantageous rigidity and strength properties. As already described above, the strength increases as the elasticity modulus increases.

The laminate according to the present invention can be used for a large number of applications, both in horizontal and in vertical condition, for example as worktops in offices, kitchens, toilets, as (partition) walls or construction panels both indoors and outdoors, in bus shelters, in offices, in damp spaces, such as toilet buildings and swimming pools. In such applications it is important that self-supporting materials be used, i.e. materials that hardly defect, if at all, under their own weight and during use (materials that are sufficiently rigid). The rigid laminate according to the present invention, which has a high elasticity modulus, is self-supporting and consequently it is suitable for the aforesaid applications.

The laminate according to the present invention can be deformed (post-formed), using heat, so that it is possible to form objects having curved shapes, such as furniture, playground equipment or curved walls, from the present laminate. To that end, the laminate is first heated, which causes the rigid laminate to plasticise to a certain degree. Then the heated and slightly plasticised laminate is deformed into the desired shape, after which cooling takes place. The deformed shape is retained during said cooling and is "frozen" into the laminate, as it were, which will regain Its rigidity after cooling, but now in its new shape. This process is called "post-forming". The degree of deformation that can be obtained depends on the properties of the laminate and on the characteristics of the production process.

If desired, one or more additives selected from the group consisting of pigments, colorants, flame retardants, hydrophobicity-enhancing agents and UV-absorbents may be added to the laminate according to the present invention.

Thus It may be desirable, for example, to add UV absorbents in particular to the surface of the present laminate, for example by using carrier layers or intermediate layers comprising a UV absorbent on one or on both surfaces of the laminate, or by using an upper layer (see hereinafter) that comprises a UV absorbent. In this way a laminate that exhibits an excellent resistance to UV light is obtained. Furthermore, one or more carrier layers or intermediate layers of the laminate may be coloured, if desired, using pigments and/or colorants, for example. It is also possible, of course, to use recycled PET materials having a particular colour in the present laminate.

The present laminate may furthermore be provided on one or both surfaces with an upper layer, for example a resin, a coating, a plastic material comprising a decorative coating or a plastic film having a decorative surface. The use of such an upper layer makes it possible to impart the desired properties, such as chemical resistance, gloss, decoration and extra scratch resistance to the laminate. Furthermore it is possible to use one or more of the aforesaid additives in the upper layer.

In a special embodiment, the upper layer is supplied in the form of a curable coating, for example a radiation curable coating.

In another embodiment, the laminate is in that case provided with a texture, such as studs or ribs, on one or both surfaces.

The present invention also relates to a method of producing a moulded rigid laminate according to claim 1, which method comprises the following steps:
a) providing a carrier layer that comprises PET;
b) applying further carrier layers that comprise PET and possibly one or more intermediate layers to the carrier layer obtained in step a);
c) subjecting the assembly to such conditions of elevated pressure and heat after step b) that the carrier layers and possibly one or more intermediate layers are bonded together.

Using the present method, a good bond Is obtained between the various carrier layers and possibly one or more intermediate layers.

According to a preferred embodiment, the carrier layers and possibly one or more intermediate layers are bonded together without the use of an additional adhesive in step c).

By selecting the conditions of elevated pressure and temperature such that the PET-containing carrier layers will slightly plasticise, a good bound between the various layers can be obtained.

The intermediate layers are preferably selected from the group consisting of polyester, paper, PE (polyethylene), PP (polypropylene), PVC (polyvinyl chloride), HPL (High Pressure Laminate), MDF (Medium Density Fibreboard), HDF (High Density Fibreboard).

According to the present invention it is possible to form a laminate from a combination of layers, both carrier layers and intermediate layers, in dependence on the intended thickness, strength, flexibility, scratch resistance and the like.

Preferably, step c) is carried out in such a manner that the temperature in the centre of the assembly obtained in step b) is at least 95 °C. The term "temperature in the centre of the assembly" is understood to mean the temperature in or near the middle layer of the assembly. The use of such a temperature leads to a good bond between the various layers.

It is in particular preferable to carry out step c) in such a manner that the temperature at one or both surfaces of the assembly is at least 5 °C higher, in particular at least 10 °C higher, than the temperature in the centre of the assembly. The term "surface of the assembly" is understood to mean the outer layer (carrier layer or intermediate layer) of the assembly. By creating a temperature difference between the centre and the surface of the laminate, the degree of christallinity is varied in the direction of the centre of the laminate. The degree of christallinity of the material at the surface will increase in comparison with the degree of christallinity in the centre of the surface, as will the scratch resistance, in proportion to the increase of the temperature that is used at the surface of the assembly during the production of a laminate.

The method according to the present invention is preferably carried out under a pressure of at least 2 bar, In particular at least 5 bar, more in particular at least 10 bar. By using a pressure of at least 2 bar, good results as regards the adhesion of the layers to be bonded together are obtained, with the adhesion between the layers increasing as the pressure increases.

The method is preferably carried out in such a manner that the assembly is subjected to an elevated pressure between pressure plates in step c), which pressure plates may be provided with a structure so as to obtain a laminate that is provided with a texture on the surface of one or both outer carrier layers and/or intermediate layers. In this way it is possible to obtain laminates having any desired texture, such as for example a depth of 1 - 5 mm.

One or more carrier layers and/or intermediate layers may be roughened or be provided with a structure, for example by embossing, prior to being pressed. Any air bubbles that may have formed during the process can thus flow out of the assembly via said structure, so that a laminate that does not have any visible air bubbles will be obtained. It is also possible however, to intercept the air bubbles that have formed during the process, so as to create a decorative effect, by using one or more smooth carrier layers and/or intermediate layers.

In another embodiment, an upper layer as already discussed above may be provided after step c).

### Examples

The present invention will now be explained in more detail by means of a number of non-limitative examples.

### Comparative Example 1

An assembly of 10 individual virgin A-PET containing carrier layers, each having a thickness of 1 mm, was treated under a pressure of 2 bar and a temperature of 95 °C in the centre and 100 °C at the surface for about 1 hour so as to obtain a laminate having a thickness of 10 mm and a PET content of the total laminate of 50 wt.%.

### Examples 2-13

An assembly of 10 individual virgin A-PET containing carrier layers, each having a thickness of 1 mm, was treated under predetermined pressure and temperature conditions for about 1 hour so as to obtain a laminate having a thickness of 10 mm. The various reaction conditions and the properties of the obtained laminate are shown in the table.

### Example 14

An assembly of 9 carrier layers, each having a thickness of 1 mm, alternately consisting of recycled A-PET and virgin PET-G, the two outer carrier layers consisting of recycled A-PET, with a total PET content of the obtained laminate of about 95%, was treated in the same manner as in Example 4 under a pressure of 5 bar and a temperature of 95 °C so as to obtain a laminate having a thickness of 9 mm. The results are shown in the table.

### Comparative Example 15

The method of Example 14 was repeated, with this exception that PE intermediate layers were used instead of PET-G containing carrier layers to obtain a laminate having a total PET content of 53 wt.%.

**Table**

| Example | PET content¹⁾ | Pressure bar | Temp (°C)²⁾ centre | Temp. (°C)³⁾ surface | Adhesion⁴⁾ | Scratch resistance⁵⁾ | E-modulus⁶⁾ | light fastness⁷⁾ | water resistance⁸⁾ | fire resistance⁹⁾ |
|---|---|---|---|---|---|---|---|---|---|---|
| 1* | 50 | 2 | 95 | 100 | - | ○ | ○ | ○ | ○ | - |
| 2 | 75 | 2 | 95 | 100 | ○ | ○ | ○ | ○ | ○ | ○ |
| 3 | 95 | 2 | 95 | 100 | + | ○ | + | ○ | + | ++ |
| 4 | 95 | 5 | 95 | 100 | ++ | ○ | + | ○ | + | ++ |
| 5 | 95 | 5 | 110 | 115 | ++ | + | + | + | + | ++ |
| 6 | 95 | 10 | 110 | 115 | ++ | + | ++ | + | + | ++ |
| 7 | 95 | 5 | 75 | 75 | - | - | - | - | - | ++ |
| 8 | 95 | 5 | 75 | 80 | - | - | - | - | - | ++ |
| 9 | 95 | 5 | 95 | 95 | + | - | ○ | - | ○ | ++ |
| 10 | 95 | 5 | 95 | 105 | ++ | + | + | + | + | ++ |
| 11 | 95 | 5 | 100 | 105 | ++ | + | + | + | + | ++ |
| 12 | 95 | 5 | 100 | 120 | ++ | + | + | + | + | ++ |
| 13 | 95 | 5 | 110 | 150 | ++ | + | ++ | + | + | ++ |
| 14 | 95 | 5 | 95 | 100 | + | ○ | ○ | ○ | - | ++ |
| 15* | 53 | 5 | 95 | 100 | ○ | + | ○ | + | ○ | ○ |

| | | | | | | | | | | |
|---|---|---|---|---|---|---|---|---|---|---|
| * Comparative Example | | | | | | | | | | |

1) The PET content of the laminate based on the weight of the total laminate, indicated in wt.%.
2) The temperature, as determined by means of a thermocouple, in the centre of the laminate, Indicated in °C.
3) The average temperature, as determined by means of a thermocouple, at both surfaces, indicated in °C.
4) The adhesion is determined by attempting to separate the carrier layers and/or intermediate layers from each other by means of a screwdriver. The following evaluation criteria were used: -- complete delamination; - considerable delamination; ○ little delamination; + no delamination, but individual layers are still visible; ++ monolithic, no individual layers visible.
5) The scratch resistance is determined in accordance with EN438-2: 1991 Clause 14. The following evaluation criteria are used: - low scratch resistance (<0.5N); ○ moderate scratch resistance (≥0.5<1N): + high scratch resistance (>1N).
6) The elasticity modulus (E-modulus) is determined in accordance with EN ISO178: 2003. The following evaluation criteria are used: - E-modulus lower than 2000 N²/mm; ○ E-modulus between 2000 and 2400 N²/mm; + E-modulus higher than 2400 N²/mm; ++ + E-modulus higher than 3000 N²/mm.
7) The light fastness is determined by means of a so-called "accelerated weather test" in accordance with florida simulation for 2500 hours. Light source: 1 Xenon lamp, min 3500 Watt - max 6500 Watt. UV-filter: indoor and outdoor filter Boro/Boro filters. Light intensity: 0.55 W/m² at 340 nm: 63 W/m² (300-400 nm). Air temperature: 50 °C. Cl400 Black panel temperature: 75 °C. (built-in thermometer). Room humidity: 50% ± 2%. Cycle: 120 minutes in total, of which 90 minutes light and 50% room humidity, followed by 30 minutes light and sprinkling. The samples were visually evaluated after 2500 hours for a number of parameters, such as yellowing, duller surface, rougher surface, discolouration, haze, corrosion, deformation. The following evaluation criteria were used for all the aforesaid parameters: - poor; ○ moderate; + good.
8) The water resistance is evaluated by immersing the laminate in water (T: 100 °C) for two hours, after which the laminate is visually evaluated for any changes, such as softening of the laminate or discolouration and/or delamination thereof. The following evaluation criteria are used: - no significant change in substantially the entire laminate; ○ a certain degree of change, in particular at the edges of the laminate; + no changes.
9) A fire test is carried out by burning the laminate with a blue flame from a Bunsen burner at an angle of 45° for 15 seconds. The following evaluation criteria are used: - continues to burn; ○ extinguishes after about 35 seconds; + extinguishes after 10-20 seconds; ++ extinguishes after 5-10 seconds.

From the table it is apparent that the laminates according to the present invention (PET content at least 75 wt.%, see Examples 2 and 4) exhibit better adhesion and fire resistance properties than the laminates having a PET content of about 50 wt.% (see Comparative Examples 1 and 15). Furthermore, a better adhesion and scratch resistance is obtained when the temperature in the centre of the laminate runs up from 75 °C (Example 8) to 95 °C (Examples 4) or even 110 °C (Example 5). Furthermore, a laminate exhibiting a better adhesion is obtained when a higher pressure is used, as appears from the difference between Example 3 (2 bar) and Example 4 (5 bar). From the table it is also apparent that if the temperature at the surface of the assembly is 5-10 °C higher than the temperature in the centre of the assembly (Example 4), better results as regards adhesion, scratch resistance and E-modulus are obtained than if the temperature that is used in the centre is the same as the temperature used at the surface of the assembly (Example 9).

## Claims

1. A moulded rigid laminate comprising two or more bonded-together carrier layers and possibly one or more intermediate layers, said laminate exhibiting a certain degree of stiffness **characterized in that** the laminate comprises at least five carrier layers composed of PET foils, wherein the amount of PET is at least 75 wt.%, based on the total weight of the laminate, wherein the thickness of the total laminate is at least 3 mm.

2. A laminate according to claim 1, **characterized in that** the amount of PET is at least 95 wt.%, based on the total weight of the laminate.

3. A laminate according to claim 1 or 2, **characterized in that** said intermediate layers have been selected from the group consisting of polyester, paper, PE, PP, PVC, HPL, MDF, HDF and combinations thereof.

4. A laminate according to any one or more of the preceding claims, **characterized in that** the carrier layers and possibly one or more or intermediate layers have been bonded together by means of compression under an elevated pressure, without an additional adhesive being used.

5. A laminate according to any one or more of the preceding claims, **characterized in that** said PET has been selected from the group consisting of virgin A-PET, recycled A-PET, virgin PET-G, recycled PET-G and combinations thereof.

6. A laminate according to claim 5, **characterized in that** carrier layers that mainly contain A-PET are present on one or both surfaces of the laminate.

7. A laminate according to any one or more of the preceding claims, **characterized in that** the degree of crystallinity of PET is inhomogeneous over the thickness of the laminates.

8. A laminate according to claim 7, **characterized in that** the degree of christallinity of PET is inhomogeneous over the thickness of the laminate, with the degree of christallinity of the PET containing carrier layers in the centre of the laminate differing from that of the PET containing carrier layers at or near the surface of the laminate.

9. A laminate according to either one or both of the claims 7-8, **characterized in that** the degree of christallinity of the PET containing carrier layers in the centre of the laminate is lower than that of the PET containing carrier layers at or near the surface of the laminate.

10. A laminate according to any one or more of the preceding claims, **characterized in that** the laminate comprises at least 5 carrier layers and/or intermediate layers.

11. A laminate according to any one or more of the preceding claims, **characterized in that** the laminate according to the present invention has an elasticity modulus of at least 2400 N/mm².

12. A laminate according to any one or more of the preceding claims, **characterized in that** the laminate comprises one or more additives selected from the group consisting of pigments, colorants, flame retardants, hydrophobicity-enhancing agents and UV-absorbents.

13. A laminate according to any one or more of the preceding claims, **characterized in that** the laminate is provided with an upper layer on one or both surfaces.

14. A laminate according to claim 13, **characterized in that** said upper layer has been selected from the group consisting of a resin, a coating, a plastic material comprising a decorative coating or a plastic film having a decorative surface.

15. A laminate according to any one or more of the preceding claims, **characterized in that** the laminate is provided with a texture on one or both surfaces.

16. A laminate according to any one or more of the preceding claims, **characterized in that** the thickness of the total laminate is at least 10 mm.

17. A method of producing a moulded rigid laminate according to any one or more of the claims 1-16, which method comprises the following steps:
a) providing a carrier layer that comprises PET;
b) applying further layers that comprise PET and possibly one or more intermediate layers to the carrier layer obtained in step a);
c) subjecting the assembly to such conditions of elevated pressure and heat after step b) that the carrier layers and possibly one or more intermediate layers are bonded together.

18. A method according to claim 17, **characterized in that** the carrier layers and possibly one or more intermediate layers are bonded together without the use of an additional adhesive in step c).

19. A method according to either one or both of the claims 17-19,
**characterized in that** the intermediate layer is selected from the group consisting of polyester, paper, PE, PP, PVC, HPL, MDF, HDF and combinations thereof.

20. A method according to any one or more of the claims 17-19, **characterized in that** step c) is carried out in such a manner that the temperature in the centre of the assembly obtained in step b) is at least 95 °C.

21. A method according to any one or more of the claims 17-20, **characterized in that** step c) is carried out in such a manner that the temperature at one or both surfaces of the assembly obtained in step b) is at least 5 °C higher, than the temperature in the centre of the assembly.

22. A method according to any one or more of the claims 17-21, **characterized in that** step c) is carried out under a pressure of at least 2 bar.

23. A method according to any one or more of the claims 17-22, **characterized in that** an upper layer is provided after step c).

24. Use of the rigid laminate according to any one or more of the claims 1-16 for worktops, partition walls, construction panels, furniture, playground equipment and walls.

## Patentansprüche

1. Ein ausgeformtes rigides Laminat, welches zwei oder mehr aneinander geklebte Trägerschichten und eventuell eine oder mehr Zwischenschichten umfasst, das genannte Laminat weist einen bestimmten Steifheitsgrad auf, **dadurch gekennzeichnet, dass** das Laminat mindestens fünf aus PET-Folien zusammengesetzte Trägerschichten umfasst, wobei die PET-Menge mindestens 75 Gew.-% basierend auf dem Gesamtgewicht des Laminats beträgt, wobei die Dicke des Gesamtlaminats mindestens 3 mm ist.

2. Ein Laminat nach Anspruch 1, **dadurch gekennzeichnet, dass** die PET-Menge mindestens 95 Gew.-% basierend auf dem Gesamtgewicht des Laminats ist.

3. Ein Laminat nach Anspruch 1 oder 2, **dadurch gekennzeichnet, dass** die genannten Zwischenschichten aus der Gruppe bestehend aus Polyester, Papier, PE, PP, PVC, HPL, MDF, HDF und Kombinationen daraus ausgewählt wurden.

4. Ein Laminat nach einem oder mehreren der vorhergehenden Ansprüche, **dadurch gekennzeichnet, dass** die Trägerschichten und eventuell eine oder mehrere Zwischenschichten mittels Kompression unter erhöhtem Druck aneinander geklebt wurden, ohne dass ein zusätzlicher Klebstoff verwendet wurde.

5. Ein Laminat nach einem oder mehreren der vorhergehenden Ansprüche, **dadurch gekennzeichnet, dass** das genannte PET aus der Gruppe bestehend aus Neu-A-PET, Recycling-A-PET, Neu-PET-G, Recycling-PET-G und Kombinationen daraus ausgewählt wurde.

6. Ein Laminat nach Anspruch 5, **dadurch gekennzeichnet, dass** die Trägerschichten, die hauptsächlich A-PET enthalten, auf einer oder beiden Oberflächen des Laminats vorhanden sind.

7. Ein Laminat nach einem oder mehreren der vorhergehenden Ansprüche, **dadurch gekennzeichnet, dass** der Kristallinitätsgrad des PET inhomogen über die Dicke des Laminats ist.

8. Ein Laminat nach Anspruch 7, **dadurch gekennzeichnet, dass** der Kristallinitätsgrad des PET inhomogen über die Dicke des Laminats ist, wobei der Kristallinitätsgrad der PET-enthaltenden Trägerschichten im Zentrum des Laminats sich von dem der PET-enthaltenden Trägerschichten auf oder nah an der Oberfläche des Laminats unterscheidet.

9. Ein Laminat nach einem oder beiden der Ansprüche 7-8, **dadurch gekennzeichnet, dass** der Kristallinitätsgrad der PET-enthaltenden Trägerschichten im Zentrum des Laminats niedriger ist als der der PET-enthaltenden Trägerschichten auf oder nah an der Oberfläche des Laminats.

10. Ein Laminat nach einem oder mehreren der vorhergehenden Ansprüche, **dadurch gekennzeichnet, dass** das Laminat mindestens 5 Trägerschichten und/oder Zwischenschichten umfasst.

11. Ein Laminat nach einem oder mehreren der vorhergehenden Ansprüche, **dadurch gekennzeichnet, dass** das Laminat der vorliegenden Erfindung einen Elastizitätsmodul von mindestens 2400 N/mm² aufweist.

12. Ein Laminat nach einem oder mehreren der vorhergehenden Ansprüche, **dadurch gekennzeichnet, dass** das Laminat einen oder mehrere Zusätze ausgewählt aus der Gruppe, die aus Pigmenten, Farbstoffen, Brandschutzmitteln, hydrophobieerhöhenden Mitteln und UV-Absorptionsmitteln besteht, umfasst.

13. Ein Laminat nach einem oder mehreren der vorhergehenden Ansprüche, **dadurch gekennzeichnet, dass** das Laminat mit einer Oberschicht auf einer oder beiden Oberflächen ausgestattet ist.

14. Ein Laminat nach Anspruch 13, **dadurch gekennzeichnet, dass** die genannte Oberschicht aus der Gruppe ausgewählt wird, die aus einem Harz, einer Beschichtung, einem Kunststoff, der eine Dekorbeschichtung umfasst, oder einer Kunststofffolie, die eine Dekoroberfläche aufweist, besteht.

15. Ein Laminat nach einem oder mehreren der vorhergehenden Ansprüche, **dadurch gekennzeichnet, dass** das Laminat auf einer oder beiden Oberflächen mit einer Struktur ausgestattet ist.

16. Ein Laminat nach einem oder mehreren der vorhergehenden Ansprüche, **dadurch gekennzeichnet, dass** die Dicke des Gesamtlaminats mindestens 10 mm ist.

17. Ein Verfahren zur Herstellung eines ausgeformten rigiden Laminats nach einem oder mehreren der Ansprüche 1-16, welches die folgenden Schritte umfasst:
a) Bereitstellen einer Trägerschicht, die PET umfasst;
b) Aufbringen weiterer Trägerschichten, die PET umfassen und möglicherweise einer oder mehrerer Zwischenschichten auf die in Schritt a) erhaltene Trägerschicht;
c) Die Zusammensetzung solchen Bedingungen erhöhten Drucks und Hitze nach Schritt b) aussetzen, dass die Trägerschichten und möglicherweise eine oder mehrere Zwischenschichten aneinander geklebt werden.

18. Ein Verfahren nach Anspruch 17, **dadurch gekennzeichnet, dass** die Trägerschichten und möglicherweise eine oder mehrere Zwischenschichten ohne die Verwendung eines zusätzlichen Klebstoffes in Schritt c) aneinander geklebt werden.

19. Ein Verfahren nach einem oder beiden der Ansprüche 17-18, **dadurch gekennzeichnet, dass** die Zwischenschicht aus der Gruppe bestehend aus Polyester, Papier, PE, PP, PVC, HPL, MDF, HDF und Kombinationen daraus ausgewählt wird.

20. Ein Verfahren nach einem oder mehreren der Ansprüche 17-19, **dadurch gekennzeichnet, dass** Schritt c) auf eine solche Weise durchgeführt wird, dass die Temperatur im Zentrum der Zusammensetzung, die in Schritt b) erhalten wird, mindestens 95°C beträgt.

21. Ein Verfahren nach einem oder mehreren der Ansprüche 17-20, **dadurch gekennzeichnet, dass** Schritt c) auf eine solche Weise durchgeführt wird, dass die Temperatur auf einer oder beiden Oberflächen der Zusammensetzung, die in Schritt b) erhalten wird, mindestens 5°C höher ist als die Temperatur im Zentrum der Zusammensetzung.

22. Ein Verfahren nach einem oder mehreren der Ansprüche 17-21, **dadurch gekennzeichnet, dass** Schritt c) unter einem Druck von mindestens 2 bar durchgeführt wird.

23. Ein Verfahren nach einem oder mehreren der Ansprüche 17-22, **dadurch gekennzeichnet, dass** eine Oberschicht nach Schritt c) bereitgestellt wird.

24. Verwendung des rigiden Laminats nach einem oder mehreren der Ansprüche 1-16 für Arbeitsflächen, Trennwände, Bauelemente, Möbel, Spielplatzausstattung und Wände.

## Revendications

1. Stratifié rigide moulé comprenant deux couches ou plus de support liées ensemble et éventuellement une ou plusieurs couches intermédiaires, ledit stratifié présentant un certain degré de rigidité, **caractérisé en ce que** le stratifié comprend au moins cinq couches de support composées de feuilles de PET, où la quantité de PET est d'au moins 75 % en poids, par rapport au poids total du stratifié, où l'épaisseur de l'ensemble du stratifié est d'au moins 3 mm.

2. Stratifié selon la revendication 1, **caractérisé en ce que** la quantité de PET est d'au moins 95 % en poids, par rapport au poids total du stratifié.

3. Stratifié selon la revendication 1 ou 2, **caractérisé en ce que** lesdites couches intermédiaires ont été choisies parmi le groupe consistant en polyester, papier, PE, PP, PVC, HPL, MDF, HDF et leurs combinaisons.

4. Stratifié selon l'une quelconque ou plusieurs des revendications précédentes, **caractérisé en ce que** les couches de support et éventuellement une ou plusieurs couches intermédiaires ont été liées ensemble par compression à une pression élevée, sans l'utilisation d'un autre adhésif.

5. Stratifié selon l'une quelconque ou plusieurs des revendications précédentes, **caractérisé en ce que** ledit PET a été choisi parmi le groupe consistant en A-PET vierge, A-PET recyclé, PET-G vierge, PET-G recyclé et leurs combinaisons.

6. Stratifié selon la revendication 5, **caractérisé en ce que** des couches de support qui contiennent principalement du A-PET sont présentes sur une ou les deux surfaces du stratifié.

7. Stratifié selon l'une quelconque ou plusieurs des revendications précédentes, **caractérisé en ce que** le degré de cristallinité de PET est non homogène à travers l'épaisseur du stratifié.

8. Stratifié selon la revendication 7, **caractérisé en ce que** le degré de cristallinité de PET est non homogène à travers l'épaisseur du stratifié, le degré de cristallinité du PET comprenant des couches de support au centre du stratifié étant différent de celui du PET contenant des couches de support à la surface de stratifié ou à proximité de celle-ci.

9. Stratifié selon l'une ou les deux revendications 7 à 8, **caractérisé en ce que** le degré de cristallinité du PET contenant des couches de support au centre du stratifié est inférieur à celui du PET contenant des couches de support à la surface du stratifié ou à proximité de celle-ci.

10. Stratifié selon l'une quelconque ou plusieurs des revendications précédentes, **caractérisé en ce que** le stratifié comprend au moins 5 couches de support et/ou des couches intermédiaires.

11. Stratifié selon l'une quelconque ou plusieurs des revendications précédentes, **caractérisé en ce que** le stratifié selon la présente invention a un module d'élasticité d'au moins 2400 N/mm².

12. Stratifié selon l'une quelconque ou plusieurs des revendications précédentes, **caractérisé en ce que** le stratifié comprend un ou plusieurs additifs choisis parmi le groupe consistant en pigments, colorants, retardateurs de flamme, agents améliorant l'hydrophobicité et absorbants d'UV.

13. Stratifié selon l'une quelconque ou plusieurs des revendications précédentes, **caractérisé en ce que** le stratifié est muni d'une couche supérieure sur une ou les deux surfaces.

14. Stratifié selon la revendication 13, **caractérisé en ce que** ladite couche supérieure a été choisie parmi le groupe consistant en une résine, un revêtement, un matériau plastique comprenant un revêtement décoratif ou un film plastique ayant une surface décorative.

15. Stratifié selon l'une quelconque ou plusieurs des revendications précédentes, **caractérisé en ce que** le stratifié est muni d'une texture sur une ou les deux surfaces.

16. Stratifié selon l'une quelconque ou plusieurs des revendications précédentes, **caractérisé en ce que** l'épaisseur de l'ensemble du stratifié est d'au moins 10 mm.

17. Procédé de production d'un stratifié rigide moulé selon l'une quelconque ou plusieurs des revendications 1 à 16, lequel procédé comprend les étapes suivantes consistant à :
a) fournir une couche de support qui comprend du PET ;
b) appliquer d'autres couches de support qui comprennent du PET et éventuellement une ou plusieurs couches intermédiaires à la couche de support obtenue dans l'étape a) ;
c) soumettre l'ensemble à des conditions telles de pression et de chaleur élevées après l'étape b) que les couches de support et éventuellement une ou plusieurs couches intermédiaires sont liées ensemble.

18. Procédé selon la revendication 17, **caractérisé en ce que** les couches de support et éventuellement une ou plusieurs couches intermédiaires sont liées ensemble sans l'utilisation d'un autre adhésif dans l'étape c).

19. Procédé selon l'une ou les deux revendications 17 à 18, **caractérisé en ce que** la couche intermédiaire est choisie parmi le groupe consistant en polyester, papier, PE, PP, PVC, HPL, MDF, HDF et leurs combinaisons.

20. Procédé selon l'une quelconque ou plusieurs des revendications 17 à 19, **caractérisé en ce que** l'étape c) est réalisée d'une telle manière que la température dans le centre de l'ensemble obtenu dans l'étape b) est d'au moins 95°C.

21. Procédé selon l'une quelconque ou plusieurs des revendications 17 à 20, **caractérisé en ce que** l'étape c) est réalisée d'une telle manière que la température à l'une ou aux deux surfaces de l'ensemble obtenu dans l'étape b) est d'au moins 5°C supérieure, à la température au centre de l'ensemble.

22. Procédé selon l'une quelconque ou plusieurs des revendications 17 à 21, **caractérisé en ce que** l'étape c) est réalisée à une pression d'au moins 2 bars.

23. Procédé selon l'une quelconque ou plusieurs des revendications 17 à 22, **caractérisé en ce qu'**une couche supérieure est fournie après l'étape c).

24. Utilisation du stratifié rigide selon l'une quelconque ou plusieurs des revendications 1 à 16 pour des plans de travail, des cloisons de séparation, des panneaux de construction, des meubles, du matériel pour terrains de jeu et des cloisons.
